# EUROPEAN PATENT SPECIFICATION

(11) **EP 2 414 894 B1**
(45) Date of publication and mention of the grant of the patent: **12.02.2014**
(21) Application number: 10710348.3
(22) Date of filing: 26.03.2010
(51) Int. Cl.: G03C 1/73, G01T 1/08, G01J 1/50, C09D 11/00, C09D 11/10

(54) **UV-DOSE INDICATOR FILMS**
FOLIEN ZUR UV-DOSISANZEIGE
FILMS INDICATEURS DE DOSE D'UV

(30) Priority: 30.03.2009 EP 09156559
(43) Date of publication of application: 08.02.2012
(73) Proprietor: BASF SE, 67056 Ludwigshafen (DE)
(72) Inventor: STUDER, Katia, F-68170 Rixheim (FR); VILLENEUVE, Sébastien, F-68330 Huningue (FR)
(86) International application number: PCT/EP2010/053967
(87) International publication number: WO 2010/112408

(56) References cited:
- WO-A-2005/097876
- WO-A-2008/022952
- US-A- 6 004 724
- US-B1- 6 512 020

## Description

The invention pertains to UV-dose indicator ink compositions and UV-dose indicator films and the use thereof.

In WO 02/101462 a laser marking method, employing a composition comprising a colorant and a photolatent acid is disclosed. From WO 02/100914, US 7091257 and WO 04/052654 compositions, coloring upon exposure to light are known. WO 05/097876 provides a method of coloring a coating composition. UV indicator inks and films are for example described in WO 08/022952 and in WO 09/103611. WO 2008/022952 discloses UV-Dosis indicators.

One recurrent issue for radiation processes and more especially for radiation curing is the determination of the energy profile of the radiation (for example the UV-light or EB-dose) on a substrate which is covered by a radiation-sensitive layer. Said determination of the energy profile is important, as the energy repartition on the radiation-curable coating determines the cure profile and the coating performances on the whole coated surface.
Some light-indicator strips are already commercially available with the major drawback that it is almost impossible to characterize the energy profile on 3D substrates having a complex shape. Several known light-indicator systems show a limited performance at high UV-doses (e.g. doses higher than 2 J-cm⁻²), as the color does not develop anymore and even bleaches.

Now it has been found that the addition of a specific UV-absorber to the light indicator system improves the sensitivity at high doses and that the selection of a specific photolatent acid composition provides a stronger color gap.
The UV=dose or EB-dose indicators according to the present invention offer a correlation between the coloration strength, the absorbed energy-dose, and the cure degree for a given coating or ink or adhesive system, or more generally for the treatment extent, in particular for curing of coatings, adhesive and ink formulations and for coatings on three-dimensional substrates with relatively high energy doses.

It has now been found that a dosis indicator film for the determination of radiation emitted by a UV-light source or an electron beam, comprising a substrate, selected from the group consisting of polymer film, paper and aluminium foil, which substrate is coated with a photosensitive composition, characterized in that the photosensitive composition comprises
(a) an acid responsive colorant selected from the group consisting of
   (I) 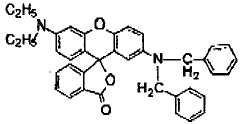
   (II) 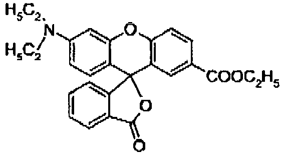 and
   (III) 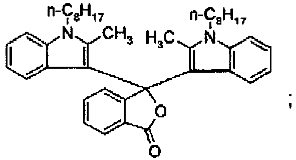
(b) at least one sulfonyloxime ester compound or a -N-O-sulfonyl compound as photolatent acid; and
(c) at least one UV-absorber compound, selected from the group consisting of 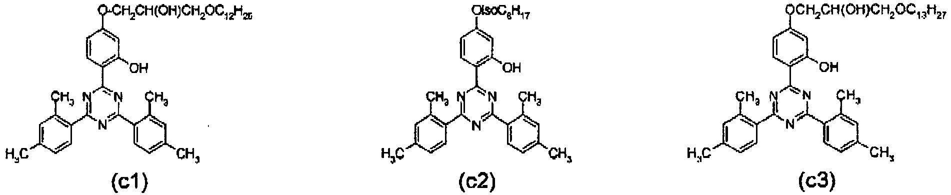 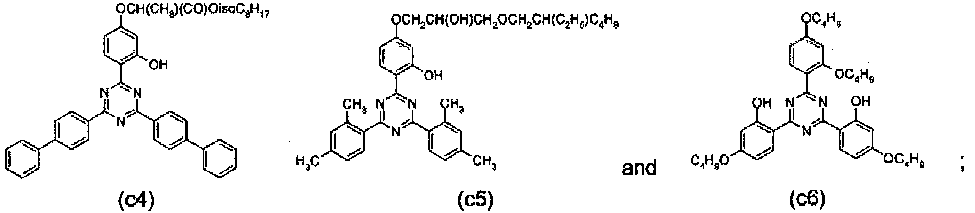 is in particular suited for the determination of the dose of radiation which has been absorbed by the irradiated coating.
Accordingly, said film is used as radiation-energy-dose indicator. In the composition applied on the substrate specific photolatent colorants are employed as UV-dose indicators or EB-dose indicators. The colorants are for example incorporated in a standard radiation-curable formulation and are applied e.g. on a white substrate. This radiation curable formulation, applied on the substrate, develops a color when it is subjected to radiation. Once the curing process is completed, the coating coloration is more or less pronounced depending on the absorbed energy-dose. Thus, a fast identification of critical places of the coating, i.e. places where the radiation is not strong enough to achieve a sufficient cure, is possible.
For example, the colorants can also be incorporated in a solventborne or waterborne or solventless liquid ink formulation or adhesive formulation or hotmelt adhesive and are applied e.g. on a white or transparent substrate. The film is further dried, e.g. by a thermal process. The film further develops a color when it is subjected to radiation. Once the curing process is completed, the film coloration is more or less pronounced depending on the absorbed energy-dose.

The composition on the dosis indicator film according to the present invention comprises a specific acid responsive colorant. "Acid-responsive" refers to a colorant, which forms color upon the action of an acid.
Accordingly, the determination of the radiation dose absorbed by a substrate may be performed with a colorant that as such is colorless and only forms a color upon the action of an acid.
In the composition applied on the film or in the ink composition according to the invention as well as in the process according to the invention the acid, reacting with the colorant is present in the composition in a latent form, i.e. the acid is only formed by the irradiation. The concentration of the formed acid directly influences the degree of color change of the colorant, while the concentration of the formed acid is dependent on the dose of radiation. Therefore the system as described above is suitable for the determination of the dose of radiation absorbed by a coated substrate.

Color formers wherein the structures as shown above are slightly modified by specific substituents or annelated rings might be also suitable in the context of the present invention.

The photolatent acid according to the present invention is a sulfonyl oxime ester or a sulfonyl compound compound.
In particular preferred is a composition comprising as the photolatent acid (b) a compound of the formula IIa, IIb, IIc, IId or IIe 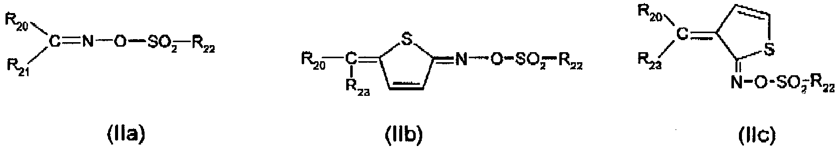 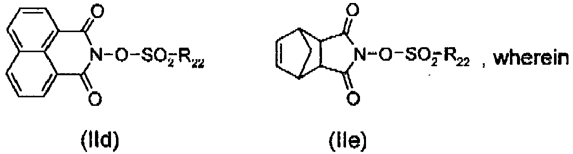
**R₂₀** is 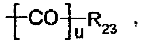 (CO)O-C₁-C₂₀alkyl, CN or C₁-C₂₀haloalkyl;
**R₂₁** has one of the definitions given for R₂₀ or is 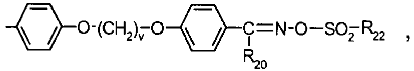 phenyl, phenyl substituted by one or more C₁-C₁₀alkyl or C₁-C₁₀alkoxy, or R₂₁ is 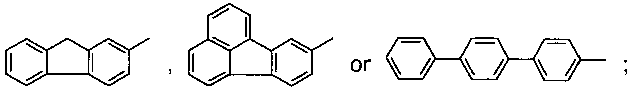
**R₂₂** is C₁-C₂₀alkyl, C₁-C₂₀haloalkyl, camphoryl, phenyl-C₁-C₆alkyl, C₃-C₃₀cycloalkyl, phenyl, naphthyl, anthryl or phenanthryl, the groups cycloalkyl, phenyl, naphthyl, anthracyl and phenanthryl being unsubstituted or substituted by one or more halogen, C₁-C₁₂haloalkyl, CN, NO₂, C₁-C₂₀alkyl, phenyl, C₁-C₁₂alkylthio, C₁-C₁₂alkoxy, phenoxy, C₁-C₁₂alkyl-O(CO)-, C₁-C₁₂alkyl-(CO)O-, R₂₄OSO₂- and/or -NR₂₅R₂₆ ;
**u** is 0 or 1;
**v** is an integer from 2-6, preferably 3;
**R₂₃** is C₁-C₂₀alkyl, cyclopentyl, cyclohexyl, camphoryl, unsubstituted phenyl, or phenyl substituted by one or more halogen, C₁-C₁₂alkyl, OR₂₇, SR₂₇ or NR₂₅R₂₆;
**R₂₄** is hydrogen, C₁-C₂₀alkyl, phenyl or phenyl substituted by C₁-C₂₀alkyl;
**R₂₅** and **R₂₆** are each independently of the other hydrogen, C₁-C₂₀alkyl, C₂-C₁₂hydroxyalkyl, or R₂₅ and R₂₆, together with the N atom to which they are bonded, form a 5- or 6-membered ring, which optionally contains one or more O or NR₂₈;
**R₂₇** is C₁-C₂₀alkyl, phenyl, phenyl-C₁-C₆alkyl or C₂-C₁₂hydroxyalkyl; and
**R₂₈** is hydrogen, phenyl, phenyl-C₁-C₆alkyl, C₁-C₂₀alkyl or C₂-C₁₂hydroxyalkyl.

Especially interesting are for example compositions comprising as the photolatent acid (b) compounds of the formula 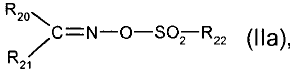 wherein
**R₂₀** is CN or C₁-C₂₀haloalkyl;
**R₂₁** is 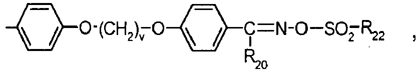 phenyl substituted by C₁-C₁₀alkoxy, or R₂₁ is 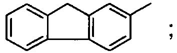
**R₂₂** is C₁-C₂₀alkyl or C₁-C₂₀haloalkyl; and
**v** is an integer from 2-6, preferably 3.

*C₁-C₂₀alkyl* is linear or branched and is, for example C₁-C₁₈-, C₁-C₁₄-, C₁-C₁₂-, C₁-C₈-, C₁-C₆-or C₁-C₄alkyl. Examples are methyl, ethyl, propyl, isopropyl, n-butyl, sec-butyl, isobutyl, tert-butyl, pentyl, hexyl, heptyl, 2,4,4-trimethylpentyl, 2-ethylhexyl, octyl, nonyl, decyl, dodecyl, tetradecyl, pentadecyl, hexadecyl, octadecyl and icosyl.

*Phenyl-C₁-C₆alkyl* is for example benzyl, phenylethyl, α-methylbenzyl, phenylpentyl, phenylhexyl or α,α-dimethylbenzyl, especially benzyl. Substituted phenyl-C₁-C₆alkyl is substituted one to four times, for example once, twice or three times, especially twice or three times, preferably on the phenyl ring.

*C₁-C₁₂alkoxy* is linear or branched and is for example C₁-C₁₀-, C₁-C₈-, C₁-C₆- or C₁-C₄-alkoxy. Examples are methoxy, ethoxy, propoxy, isopropoxy, n-butyloxy, sec-butyloxy, iso-butyloxy, tert-butyloxy, pentyloxy, hexyloxy, heptyloxy, 2,4,4-trimethylpentyloxy, 2-ethylhexyloxy, octyloxy, nonyloxy, decyloxy or dodecyloxy, in particular methoxy, ethoxy, propoxy, isopropoxy, n-butyloxy, sec-butyloxy, iso-butyloxy, tert-butyloxy, especially methoxy.

*C₁-C₂₀haloalkyl* is for example C₁-C₁₈-, C₁-C₁₂- C₁-C₁₀-, C₁-C₈-, C₁-C₆- or C₁-C₄-alkyl mono-or poly-substituted by halogen, C₁-C₂₀-, C₁-C₁₈-, C₁-C₁₂- C₁-C₁₀-, C₁-C₈-, C₁-C₆- and C₁-C₄-alkyl being, for example, as defined above. The alkyl radical is for example mono- or polyhalogenated, up to the exchange of all H-atoms by halogen. The preferred halogen in the the halogenated alkyl is fluoro. Examples are chloromethyl, trichloromethyl, trifluoromethyl, nonafluorobutyl, octafluorobutyl, heptafluoropropyl, or 2-bromopropyl, especially trifluoromethyl, heptafluoropropyl, nonafluorobutyl or octafluorobutyl.
*Halogen* is fluorine, chlorine, bromine and iodine, especially fluorine, chlorine and bromine, preferably fluorine.

*C₂-C₁₂hydroxyalkyl* for example is C₁-C₁₀-, C₂-C₁₀-, C₁-C₈-, C₂-C₈-, C₂-C₄- or C₁-C₄alkyl as described above, however mono- or polysubstituted by OH. For example 1 to 6, e.g. 1 to 4, or one or two OH-substituents are positioned at the alkyl. Examples are hydroxymethyl, hydroxyethyl, dihydroxypropyl, hydroxypropyl, dihydroxyethyl, in particular hydroxyethyl.

*C₃-C₃₀cycloalkyl* is a mono- or polycyclic aliphatic ring, optionally substituted by C₁-C₁₂alkyl, for example a mono-, bi- or tricyclic aliphatic ring, e.g. C₃-C₂₀-, C₃-C₁₈-, C₃-C₁₂-, C₃-C₁₀cycloalkyl. C₃-C₃₀cycloalkyl in the context of the present application is to be understood as alkyl which at least comprises one ring. Examples of monocyclic rings are cyclopropyl, cyclobutyl, cyclopentyl, cyclohexyl, or cycloheptyl, especially cyclopentyl and cyclohexyl, a polycyclic ring is for example adamantyl. Further examples are structures like 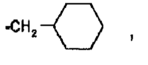 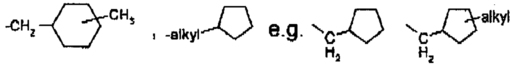 etc.

*C₁-C₁₂alkylthio* is linear or branched and is for example C₁-C₁₀-, C₁-C₈-, C₁-C₆- or C₁-C₄alkylthio. Examples are methylthio, ethylthio, propylthio, isopropylthio, n-butylthio, secbutylthio, iso-butylthio, tert-butylthio, pentylthio, hexylthio, heptylthio, 2,4,4-trimethylpentylthio, 2-ethylhexylthio, octylthio, nonylthio, decylthio or dodecylthio, in particular methylthio, ethylthio, propylthio, isopropylthio, n-butylthio, sec-butylthio, iso-butylthio, tert-butylthio, preferably methylthio.

If R₂₅ and R₂₆, together with the N atom to which they are bonded, form a 5- or 6-membered ring, which optionally contains one or more O or NR₂₈ saturated or unsaturated rings are formed, for example aziridine, pyrrole, pyrrolidine, oxazole, pyridine, 1,3-diazine, 1,2-diazine, piperidine or morpholine, in particular morpholine.

The term "*and*/*or*" is intended to express the fact that not just one of the alternatives defined (substituents) may be present but that it is likewise possible to have two or more different alternatives (substituents) from among those defined, together, i.e. mixtures of different alternatives (substituents).
The term *"at least"* is intended to define one or more than one, a mixture of more than one, e.g. one or two or three, preferably one or two.
In the description and the claims, the word *"comprising"* is to be understood to mean that a defined subject or a defined group of subjects is included but without ruling out any other substances not explicitly mentioned, unless expressly described otherwise.

In particular interesting photolatent acid compounds (b) are of the formula (II'a) 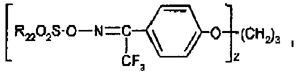 wherein R₂₂ is C₁-C₂₀haloalkyl, especially CF₃, and C₁-C₂₀alkyl, especially propyl; of the formula (IIa), wherein R₂₁ is phenyl substituted by C₁-C₁₀alkoxy, or R₂₁ is 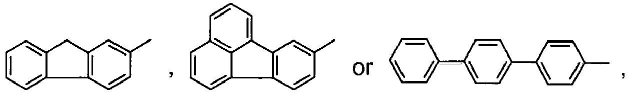 in particular 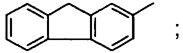 R₂₀ is C₁-C₂₀haloalkyl or CN and R₂₂ is C₁-C₂₀haloalkyl; or of the formula (II'c) 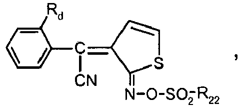 wherein R_{d} is C₁-C₂₀alkyl, especially methyl, and R₂₂ is C₁-C₂₀alkyl, especially methyl, propyl, octyl, camphoryl, p-tolyl or 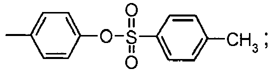 of the formula IIe and IId as defined above, wherein R₂₂ is haloalkyl, in particular trifluoromethyl; etc..

In particular interesting as photolatent acids in the present invention are oxime ester compounds of the formulae IIa as defined above.

Specific examples are selected from the group consisting of 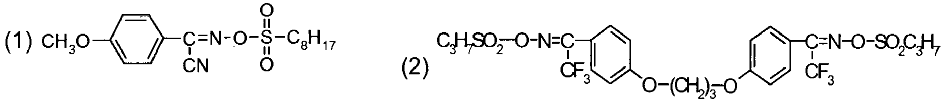 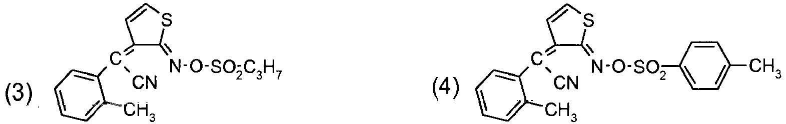 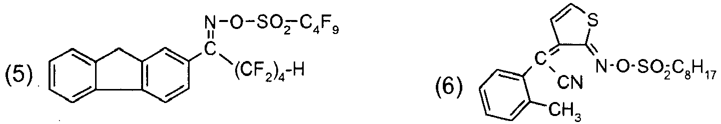 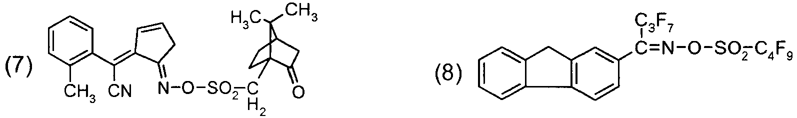 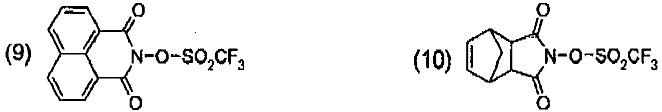 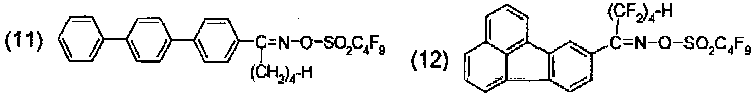 and
(13) any mixture thereof.

"(13) any mixture thereof" denotes any mixture of the compounds (1)-(12) as described above, comprising for example 2-12 different components, or 2-6, or 2-4, or 2 or 3 or two different components, selected from the compounds of formulae (1)-(12).

Preferred photolatent acid compounds are the compounds (1), (2), (3), (5) and (8) as defined above.

The preparation of such compounds is for example disclosed in WO 00/10972, WO 00/26219, GB 2348644, US 4450598, WO 98/10335, WO 99/01429, EP 780729, EP 821274, US 5237059, EP 571330, EP 241423, EP 139609, EP 361907, EP 199672, EP 48615, EP 12158, US 4136055, WO 02/25376, WO 02/98870, WO 03/067332 and WO 04/074242.

It is evident that the photolatent acid compounds may be used singly or in any combination with one another.
For example mixtures of photolatent acids can be used depending on the required sensitivity. If necessary, photosensitizers which shift or broaden the spectral sensitivity may be added. Examples of suitable sensitizer compounds are disclosed in WO 06/008251, page 36, line 30 to page 38, line 8. For example thioxanthone and ifs derivatives, benzophenones and corresponding derivatives, coumarin and coumarin derivatives, 3-(aroylmethylene)-thiazoline and derivatives thereof, rhodanine and corresponding derivatives, as well as any other customary sensitizer known the the person skilled in the art.

Interesting is for example a colorant (a) / photolatent acid (b) combination of a compound of the formula (III) with (1), (III) with (2), (III) with (1) and (2), or for example (III) with (5), (III) with (9), (III) with (10), (III) with (11) or (III) with (12), or for example (III) with (5), (III) with (9), (III) with (10), (III) with (11) and (III) with (12).
Other interesting combinations comprise a compound (I) with (1) and (2), (I) with (1), (I) with (2), (I) with (5), (I) with (10), (I) with (11) and (I) with (12).
Object of interest also are the combinations of (II) with (1), (2), (3), (4), (5), (6), (7), (8), (9), (10), (11), or (12) or a combination of (II) with any mixture the cited acids (1)-(12), that is (II) with (13).
The above preferences concerning the combination of colorant (a) and photolatent acid (b) refer to all categories of the claims, in particular to the dosis indicator film, the dosis indicator ink, the dosis indicator adhesive layer and the methods employing both.

In particular interesting as component (c) of the composition are compounds (c4) and (c6).

For the application on the substrate, whose energy-dose absorbance is to be determined, suitably the composition, comprising (a) a selected acid responsive colorant as described above and (b) a photolatent acid as described above and (c) a UV-absorber as described above, is incorporated in a common ultraviolet-curable (UV-curable) or electron beam curable (EB-curable) formulation. Accordingly, the components (a), (b) and (c) are for example admixed with (d) a polymerizable ethylenically unsaturated component. That is an ethylenically unsaturated monomeric, oligomeric and/or polymeric compound. In addition the formulation can contain other additives (g), e.g. pigments, to provide e.g. a pigmented ink, e.g. a pigmented offset or flexo or screen ink. The person skilled in the art is familiar with such compositions.
Subject of the invention therefore also is a dosis indicator ink for the determination of radiation emitted by a UV-light source or an electron beam, comprising
(a) an acid responsive colorant selected from the group consisting of
   (I) 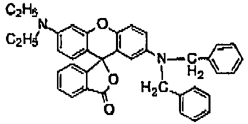
   (II) 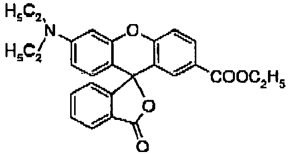 and
   (III) 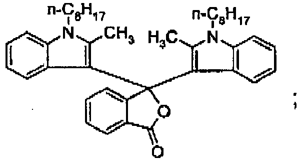
(b) at least one sulfonyloxime ester compound or a -N-O-sulfonyl compound as photolatent acid;
(c) at least one UV-absorber compound, selected from the group consisting of 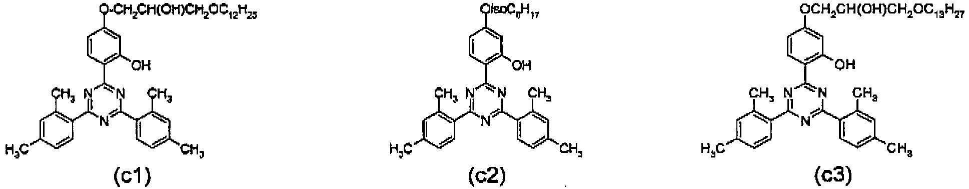 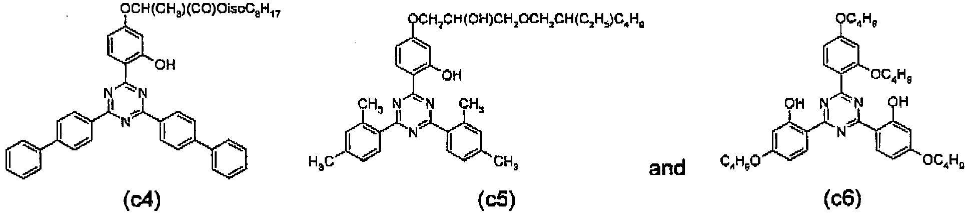 and either
(d) a polymerizable ethylenically unsaturated component; and optionally
(e) a radical photoinitiator; and optionally
(g) further additives
   or
   (i) a solventborne or waterborne or solventless liquid ink or solventborne or waterborne or solventless liquid adhesive or a hotmelt adhesive providing a dried film Interesting is for example a dosis indicator ink as described above as colorant (a) comprising a compound of the formula (I) or (II). Further interesting is a corresponding ink comprising a compound of the formula (I). Another interesting ink comprises a compound of the formula (II).
The composition (a), (b) and (c) can also be extruded with (h) a polymer suitable to prepare foils. The person skilled in the art is familiar with such polymers. Examples for polymers suitable to prepare foils are polyethylene e.g. of low density (PE-LD), of high density (PE-HD), linear of low density (PE-LLD), polypropylene (PP), polylsobutylene (PIP), polyvinyl chloride (PVC), polyvinylidene chloride (PCDC), polystyrene (PS), acrylonitrile-butadiene-styrene (ABS), polyamides (PA), polyurethanes (PUR), polyethylenetherephtalates (PET), polyethylenenaphthalates (PEN), polycarbonates (PC), polyoxymethylene (POM), polymethylmethacrylate (PMMA), polybutyleneterephtalate (PBT), ethylene-vinylacetate (E/VA) etc.., and corresponding copolymers.
The photolatent acid and acid-responsive colorant mixture is for example provided in (d), (h) or in a solvent under a concentrate form to be further incorporated into an ink, adhesive or coating composition or into a putty or gel.

The composition (a) (latent colorant), (b) (photolatent acid) and (c) UV-absorber can also be dissolved in (i) a solventborme or waterborne or solventless liquid ink or a solventborne or waterborne or solventless liquid adhesive or a hotmelt adhesive, e.g. polyacrylate resins, polymethyl methacrylate, polyvinylbutyral, copolymers of vinyl chloride/vinyl acetate, or can be dissolved into a solvent. Different categories of inks are for example described in "The printing ink manual", fourth edition, Edited by R.H. Leach. Different categories of adhesives are for example disclosed in "Kleben" 5th Edition by Gerd Habenicht.

The type of matrix used for (a), (b) and (c) [(d), (h), (i)] may influence the color development with regard to the UV-dose and to the temperature.
The higher the glass temperature of the matrix resins the lower is the influence of the temperature on the color development.

The matrix advantageously does not comprise any basic or acidic components [besides (a), (b) and (c)] which could interfere with the color forming reaction.

The matrix may also be based on oxidative drying systems or 2-pack systems, known to the person skilled in the art and for example published in "The printing ink manual", fourth edition, Edited by R.H. Leach or in "Kleben" 5th Edition by Gerd Habenicht.
(d) UV- and EB-curable formulations include polymers, oligomers or monomers selected from, for example, (meth)acrylate monomers, oligomers and polymers and copolymers, including urethane acrylates, epoxy acrylates, polyester acrylates, elastomeric (meth)acrylates, including mono, di, tri and tetra functional monomers or related oligomeric or polymeric compositions which optionally may be end-capped with monomeric units containing polymerizable double bonds, especially including vinyl or vinyl-type monomers, oligomers and polymers including those based on vinyl chloride, vinyl alcohol, vinyl acetate and related vinyl monomers, oligomers and polymers. Preferred are acrylic resins having a low acid number (< 15mg KOH/g), preferably below 3mg KOH/g.

A radical photopolymerization initiator (e) is employed in the dosis indicator ink. Said initiator (e) is for example a radical photoinitiator of the mono- or bisacylphosphine oxide type in combination with a radical photoinitiator of the alpha-hydroxy ketone type. Such photoinitiators are commercially available, for example from Ciba Inc.. Examples are α-hydroxycycloalkyl phenyl ketones or α-hydroxyalkyl phenyl ketones, such as for example 2-hydroxy-2-methyl-1-phenyl-propanone, 1-hydroxy-cyclohexyl-phenyl-ketone, 1-(4-dodecylbenzoyl)-1-hydroxy-1-methyl-ethane, 1-(4-isopropylbenzoyl)-1-hydroxy-1-methyl-ethane, 1-[4-(2-hydroxyethoxy)-phenyl]-2-hydroxy-2-methyl-1-propan-1-one, 2-hydroxyl-1-{4-[4-(2-hydroxy-2-methyl-propionyl)-benzyl)-phenyl}-2-methyl-propan-1-one, 2-hydroxy-1-{4-[4-propionyl)-phenoxy]-phenyl}-2-methyl-propan-1-one, monoacyl phosphine oxides, e.g. (2,4,6-trimethylbenzoyl)diphenylphosphine oxide, ethyl (2,4,6 trimethylbenzoyl phenyl) phosphinic acid ester; bisacylphosphine oxides, e.g. bis(2,6-dimethoxy-benzoyl)-(2,4,4-trimethyl-pentyl)phosphine oxide, bis(2,4,6-trimethylbenzoyl)-phenylphosphine oxide or bis(2,4,6-trimethylbenzoyl)-2,4-dipentoxyphenylphosphine oxide.
Preferred are combinations of 2,4,6-trimethylbenzoyl-diphenyl phosphine oxide and 2-hydroxy-1-{4-[4-(2-hydroxy-2-methyl-propionyl)-benzyl]-phenyl}-2-methyl-propan-1-one.
It is evident that the above list is non-limiting and other photoinitiators not named specifically in said list may be employed.

In the dosis indicator film or the dosis indicator ink of the present invention the acid responsive colorant (a) is for example present in a concentration of 0.1%-20%, e.g. 1%-12%, in particular 2%-8%, while the concentration of the photolatent acid (b) ranges between 0.1%-20%, for example 0.1%-8%, in particular 0.2%-4%, based on the composition, and the concentration of the UV-absorber (c) is for example present in a concentration of 0.1%-20%, for example 0.5%-10%, e.g. 1%-10%, in particular 1%-6%.
"%" in the context of the present application is intended to refer to the weight, unless specifically indicated otherwise.

The ratio of components (a), an acid responsive colorant and (b), a photolatent acid is for example from about 0.001:1 to 1: 0.001, preferably from 0.01:1 to 1: 0.01.

The invention also pertains to a method to determine the radiation dose absorbed by a dosis indicator film as described above, by measuring the color intensity of the irradiated film, either visually or by colorimetry measurement, giving a direct correlation to the radiation-dose via the color change from the non-irradiated to the irradiated film, characterized in that the film comprises the photosensitive layer as defined above; and
The invention also includes a method to determine the radiation dose absorbed by a dosis indicator ink as defined above, by measuring the color intensity of the irradiated ink, either visually or by colorimetry measurement, giving a direct correlation to the radiation-dose via the color change from the non-irradiated to the irradiated ink (e.g. after applying the ink onto a substrate, for example a film), characterized in that the ink comprises components (a), (b), (c), (d) and (e) as defined above or comprises components (a), (b), (c) and (i) as defined above.

Interesting is a method as described above, wherein the color change evolves from a non-colored to a colored coating.
For example, color change from clear to red can be monitored by a* parameter from CIE-Lab system, or by brightness L*, or by optical density or by transmittance.

Subject of the invention is the use of a dose indicator film as defined above, or a dose indicator ink as defined above, for the determination of the dose of radiation absorbed by a substrate.
The invention in particular includes a method as defined above wherein the radiation dose absorbed by the dosis indicator film or the dosis indicator ink is higher than 50 mJ·cm⁻²; as well as the use of a dose indicator film as defined above, or a dose indicator ink as defined above, wherein the radiation dose absorbed by the dosis indicator film or the dosis indicator ink is higher than 50 mJ·cm⁻².

Accordingly, a composition comprising (a) an acid responsive colorant of the formula (I), (II) or (III) as described above and (b) a photolatent acid as described above and (c) a UV-absorber as described above is admixed with a component (d) and (e) or with a component (i) as described above in order to form a UV dose indicator ink or a a UV dose indicator adhesive. Or, a composition comprising (a) an acid responsive colorant of the formula (I), (II) or (III) as described above and (b) a photolatent acid as described above and (c) a UV-absorber as described above is admixed and applied on a polymer film, paper of an aluminium foil as the photosensitive layer.
Said photosensitive layer, or the ink is subjected to the irradiation. The difference of the color prior and after irradiation is determined by common color measurement methods, for example visually or by suitable colorimetry measurement means, known to the person skilled in the art. Said difference gives direct correlation to the energy dose which has hit the substrate.
In other words, a UV dose indicator film or ink according to the present invention is irradiated for determined periods of time with determined energy doses and the color changes are measured. The correlation between the measured color changes and the applied energy doses allows determination of the corresponding energy dose applied to a substrate.

Thus, a method to determine the radiation dose absorbed by a coated substrate, according to the invention comprises
1. preparing a dosis indicator ink comprising
   (a) an acid responsive colorant of the formula (I), (II) or (III),
   (b) a photolatent acid as defined above [compounds (1)-(12) or mixtures thereof],
   (c) a UV-absorber,
   (d) ethylenically unsaturated monomeric, oligomeric and/or polymeric compounds, and optionally
   (e) a radical photoinitiator; and optionally
   (g) a further additive, in partcualr a pigment;
2. applying said ink to a substrate;
3. subjecting the coated substrate to the radiation of defined energy for a defined period of time;
4. measuring the color change of the coating.

Or, a method to determine the radiation dose absorbed by a coated substrate, according to the invention comprises
1'. preparing a dosis indicator film, comprising a substrate, selected from the group consisting of polymer film, paper and aluminium foil, which substrate is coated with a photosensitive layer, comprising
   (a) an acid responsive colorant of the formula (I), (II) or (III),
   (b) a photolatent acid as defined above [compounds (1)-(12) or mixtures thereof],
   (c) a UV-absorber
2'. subjecting the film to the radiation of defined energy for a defined period of time;
3'. measuring the color change of the coating.

Or, a method to determine the radiation dose absorbed by a coated substrate, according to the invention comprises
1". preparing a dosis indicator ink or a dosis indicator adhesive comprising
   (a) an acid responsive colorant of the formula (I), (II) or (III),
   (b) a photolatent acid as defined above [compounds (1)-(12) or mixtures thereof],
   (c) a UV-absorber,
      (i) a solventborne or waterborne or solventless liquid ink or solventborne or waterborne or solventless liquid adhesive or a hotmelt adhesive formulation;
2". applying said ink or adhesive to a substrate and drying;
3". subjecting the coated substrate to the radiation of defined energy for a defined period of time;
4". measuring the color change of the coating.

In particular said method comprises
1. preparing a dosis indicator ink comprising
   (a) an acid responsive colorant of the formula (I), (II) or (III),
   (b) a photolatent acid as defined above [compounds (1)-(12) or mixtures thereof],
   (c) a UV-absorber,
   (d) ethylenically unsaturated monomeric, oligomeric and/or polymeric compounds, and optionally
   (e) a radical photoinitiator, and optionally
   (g) a further additive, in particular a pigment;
2. applying said ink to a substrate;
3. subjecting the coated substrate to the radiation of defined energy for a defined period of time;
4. measuring the color change of the coating,
5. repeat steps 2-4 with different radiation doses and periods of time to determine the correlation between radiation dose and degree of color change; and
6. determining the unknown radiation dose applied on a sample prepared according to steps 1-2 by comparing the measured color change with the radiation dose/color correlation obtained according to step 5.

Or, in particular said method comprises
1'. preparing a dosis indicator film, comprising a substrate, selected from the group consisting of polymer film, paper and aluminium foil, which substrate is coated with a photosensitive layer, comprising
   (a) an acid responsive colorant of the formula (I), (II) or (III),
   (b) a photolatent acid as defined above [compounds (1)-(12) or mixtures thereof],
   (c) a UV-absorber,
2'. subjecting the film to the radiation of defined energy for a defined period of time;
3'. measuring the color change of the coating;
4'. repeat steps 2-3 with different radiation doses and periods of time to determine the correlation between radiation dose and degree of color change; and
5'. determining the unknown radiation dose applied on a sample by comparing the measured color change with the radiation dose/color correlation obtained according to step 4.

Or, in particular said method comprises
1". preparing a dosis indicator ink or dosis indicator adhesive comprising
   (a) an acid responsive colorant of the formula (I), (II) or (III),
   (b) a photolatent acid as defined above [compounds (1)-(12) or mixtures thereof],
   (c) a UV-absorber,
      (i) a solventborne or waterborne or solventless liquid ink or a solventborne or waterborne or solventless liquid adhesive or hotmelt adhesive formulation;
2". applying said ink or adhesive to a substrate and drying;
3". subjecting the coated substrate to the radiation of defined energy for a defined period of time;
4". measuring the color change of the coating
5". repeating steps 2-4 with different radiation doses and periods of time to determine the correlation between radiation dose and degree of color change; and
6". determining the unknown radiation dose applied on a sample prepared according to steps 1-2 by comparing the measured color change with the radiation dose/color correlation obtained according to step 5.

"Drying" in the above described methods is considered to be a physical evaporation of the solvent (e.g. by raised temperature) or a chemical crosslinking reaction.

The *color measurement* for the determination of the color change may be made with any known reproducible method. Preferably DIN and ASTM measurement methods are employed.
Non-limiting examples are "Yellownes Index" (YI) measurement according to ASTMD1925-70 and measurement according to the CIELAB-system (e.g. the a* parameter, brightness L* or transmittance). Another example is the measurement of color changes according to DIN 6174 or DIN 6176.

Radiation whose dose is determined in the context of the present invention involves UV-radiation, for example of the wavelength range of about 150 to 800 nm, preferably from 200 to 400 nm, and energies of about 1 mJ/cm² to 50 J/cm², for example from 1 mJ/cm² to 5 J/cm², preferably from 50 mJ/cm² to 3 J/cm²; electron beam radiation (EB), for example with energies from about 0.1 kGy to 1000 kGy, especially from 1 kGy to 100 kGy, as well as radiation emitted by a plasma, i.e. the UV-radiation emitted by a plasma gas, for example in a plasma gas chamber. Plasma gases and a plasma gas chamber are for example described in WO 03/089479 and WO 03/89155.

Interesting therefore is a method as described above, wherein the radiation absorbed by the substrate origins from a UV radiation source, a UVA fluorescent lamp, an electron beam or a plasma gas.

According to the present invention the radiation dose indicator film comprises as substrate a polymer film, paper or aluminium foil.
The polymer film consists for example of any combination and kind of known polymers, e.g. polyester, polyvinylchloride, polystyrene, etc. Such films are commercially available in a wide range. The substrate polymer film is for example opaque or transparent.
The substrate polymer film is for example a thermoplastic, elastomeric, inherently crosslinked or crosslinked polymer. Examples of thermoplastic, elastomeric, inherently crosslinked or crosslinked polymers are listed below.
1. Polymers of mono- and di-olefins, for example polypropylene, polyisobutylene, polybutene-1, poly-4-methylpentene-1, polyisoprene or polybutadiene and also polymerisates of cyclo-olefins, for example of cyclopentene or norbomene; and also polyethylene (which may optionally be crosslinked), for example high density polyethylene (HDPE), high density polyethylene of high molecular weight (HDPE-HMW), high density polyethylene of ultra-high molecular weight (HDPE-UHMW), medium density polyethylene (MDPE), low density polyethylene (LDPE), and linear low density polyethylene (LLDPE), (VLDPE) and (ULDPE). Polyolefins, that is to say polymers of mono-olefins, as mentioned by way of example in the preceding paragraph, especially polyethylene and polypropylene, can be prepared by various processes, especially by the following methods:
   a) by free radical polymerisation (usually at high pressure and high temperature);
   b) by means of a catalyst, the catalyst usually containing one or more metals of group IVb, Vb, VIb or VIII. Those metals generally have one or more ligands, such as oxides, halides, alcoholates, esters, ethers, amines, alkyls, alkenyls and/or aryls, which may be either π- or σ-coordinated. Such metal complexes may be free or fixed to carriers, for example to activated magnesium chloride, titanium(III) chloride, aluminium oxide or silicon oxide. Such catalysts may be soluble or insoluble in the polymerisation medium. The catalysts can be active as such in the polymerisation or further activators may be used, for example metal alkyls, metal hydrides, metal alkyl halides, metal alkyl oxides or metal alkyl oxanes, the metals being elements of group(s) la, Ila and/or IIIa. The activators may have been modified, for example, with further ester, ether, amine or silyl ether groups. Such catalyst systems are usually referred to as Phillips, Standard Oil Indiana, Ziegler (-Natta), TNZ (DuPont), metallocene or Single Site Catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of mono- and di-olefins with one another or with other vinyl monomers, for example ethylene/propylene copolymers, linear low density polyethylene (LLDPE) and mixtures thereof with low density polyethylene (LDPE), propylene/butene-1 copolymers, propylene/isobutylene copolymers, ethylene/butene-1 copolymers, ethylene/hexene copolymers, ethylene/methylpentene copolymers, ethylene/heptene copolymers, ethylene/octene copolymers, propylene/butadiene copolymers, isobutylene/isoprene copolymers, ethylene/alkyl acrylate copolymers, ethylene/alkyl methacrylate copolymers, ethylene/vinyl acetate copolymers and copolymers thereof with carbon monoxide, or ethylene/acrylic acid copolymers and salts thereof (ionomers), and also terpolymers of ethylene with propylene and a diene, such as hexadiene, dicyclopentadiene or ethylidenenorbornene; and also mixtures of such copolymers with one another or with polymers mentioned under 1), for example polypropyleneethylene/propylene copolymers, LDPE-ethylene/vinyl acetate copolymers, LDPE-ethylene/acrylic acid copolymers, LLDPE-ethylene/vinyl acetate copolymers, LLDPE-ethylene/acrylic acid copolymers and alternately or randomly structured polyalkylene-carbon monoxide copolymers and mixtures thereof with other polymers, for example polyamides.
4. Hydrocarbon resins (for example C₅-C₉) including hydrogenated modifications thereof (for example tackifier resins) and mixtures of polyalkylenes and starch.
5. Polystyrene, poly(p-methylstyrene), poly(α-methylstyrene).
6. Copolymers of styrene or α-methylstyrene with dienes or acrylic derivatives, for example styrene/butadiene, styrene/acrylonitrile, styrene/alkyl methacrylate, styrene/butadiene/alkyl acrylate and methacrylate, styrene/maleic anhydride, styrene/acrylonitrile/methyl acrylate; high-impact-strength mixtures consisting of styrene copolymers and another polymer, for example a polyacrylate, a diene polymer or an ethylene/propylene/diene terpolymer; and also block copolymers of styrene, for example styrene/butadiene/styrene, styrene/isoprene/styrene, styrene/ethylene-butylene/styrene or styrene/ethylene-propylene/-styrene.
7. Graft copolymers of styrene or α-methylstyrene, for example styrene on polybutadiene, styrene on polybutadiene/styrene or polybutadiene/acrylonitrile copolymers, styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleic acid imide on polybutadiene; styrene and maleic acid imide on polybutadiene, styrene and alkyl acrylates or alkyl methacrylates on polybutadiene, styrene and acrylonitrile on ethylene/propylene/diene terpolymers, styrene and acrylonitrile on polyalkyl acrylates or polyalkyl methacrylates, styrene and acrylonitrile on acrylate/butadiene copolymers, and mixtures thereof with the copolymers mentioned under 6), such as those known, for example, as so-called ABS, MBS, ASA or AES polymers.
8. Halogen-containing polymers, for example polychloroprene, chlorinated rubber, chlorinated and brominated copolymer of isobutylene/isoprene (halobutyl rubber), chlorinated or chlorosulfonated polyethylene, copolymers of ethylene and chlorinated ethylene, epichlorohydrin homo- and co-polymers, especially polymers of halogen-containing vinyl compounds, for example polyvinyl chloride, polyvinylidene chloride, polyvinyl fluoride, polyvinylidene fluoride; and copolymers thereof, such as vinyl chloride/vinylidene chloride, vinyl chloride/vinyl acetate or vinylidene chloride/vinyl acetate.
9. Polymers derived from α,β-unsaturated acids and derivatives thereof, such as polyacrylates and polymethacrylates, or polymethyl methacrylates, polyacrylamides and polyacrylonitriles impact-resistant-modified with butyl acrylate.
10. Copolymers of the monomers mentioned under 9) with one another or with other unsaturated monomers, for example acrylonitrile/butadiene copolymers, acrylonitrile/alkyl acrylate copolymers, acrylonitrile/alkoxyalkyl acrylate copolymers, acrylonitrile/vinyl halide copolymers or acrylonitrile/alkyl methacrylate/butadiene terpolymers.
11. Polymers derived from unsaturated alcohols and amines or their acyl derivatives or acetals, such as polyvinyl alcohol, polyvinyl acetate, stearate, benzoate or maleate, polyvinylbutyral, polyallyl phthalate, polyallylmelamine; and the copolymers thereof with olefins mentioned in Point 1.
12. Homo- and co-polymers of cyclic ethers, such as polyalkylene glycols, polyethylene oxide, polypropylene oxide or copolymers thereof with bisglycidyl ethers.
13. Polyacetals, such as polyoxymethylene, and also those polyoxymethylenes which contain comonomers, for example ethylene oxide; polyacetals modified with thermoplastic polyurethanes, acrylates or MBS.
14. Polyphenylene oxides and sulfides and mixtures thereof with styrene polymers or polyamides.
15. Polyurethanes derived from polyethers, polyesters and polybutadienes having terminal hydroxyl groups on the one hand and aliphatic or aromatic polyisocyanates on the other hand, and their initial products.
16. Polyamides and copolyamides derived from diamines and dicarboxylic acids and/or from aminocarboxylic acids or the corresponding lactams, such as polyamide 4, polyamide 6, polyamide 6/6, 6/10, 6/9, 6/12, 4/6, 12/12, polyamide 11, polyamide 12, aromatic polyamides derived from m-xylene, diamine and adipic acid; polyamides prepared from hexamethylenediamine and iso- and/or tere-phthalic acid and optionally an elastomer as modifier, for example poly-2,4,4-trimethylhexamethylene terephthalamide or poly-m-phenylene isophthalamide. Block copolymers of the above-mentioned polyamides with polyolefins, olefin copolymers, ionomers or chemically bonded or grafted elastomers; or with polyethers, for example with polyethylene glycol, polypropylene glycol or polytetramethylene glycol. Also polyamides or copolyamides modified with EPDM or ABS; and polyamides condensed during processing ("RIM polyamide systems").
17. Polyureas, polyimides, polyamide imides, polyether imides, polyester imides, polyhydantoins and polybenzimidazoles.
18. Polyesters derived from dicarboxylic acids and dialcohols and/or from hydroxycarboxylic acids or the corresponding lactones, such as polyethylene terephthalate, polybutylene terephthalate, poly-1,4-dimethylolcyclohexane terephthalate, polyhydroxybenzoates, and also block polyether esters derived from polyethers with hydroxyl terminal groups; and also polyesters modified with polycarbonates or MBS.
19. Polycarbonates and polyester carbonates.
20. Polysulfones, polyether sulfones and polyether ketones.
21. Crosslinked polymers derived from aldehydes on the one hand and phenols, urea or melamine on the other hand, such as phenol-formaldehyde, urea-formaldehyde and melamine-formaldehyde resins.
22. Drying and non-drying alkyd resins.
23. Unsaturated polyester resins derived from copolyesters of saturated and unsaturated dicarboxylic acids with polyhydric alcohols, and also vinyl compounds as crosslinking agents, and also the halogen-containing, difficultly combustible modifications thereof.
24. Crosslinkable acrylic resins derived from substituted acrylic esters, e.g. from epoxy acrylates, urethane acrylates or polyester acrylates.
25. Alkyd resins, polyester resins and acrylate resins that are crosslinked with melamine resins, urea resins, isocyanates, isocyanurates, polyisocyanates or epoxy resins.
26. Crosslinked epoxy resins derived from aliphatic, cycloaliphatic, heterocyclic or aromatic glycidyl compounds, e.g. products of bisphenol-A diglycidyl ethers, bisphenol-F diglycidyl ethers, that are crosslinked using customary hardeners, e.g. anhydrides or amines with or without accelerators.
27. Natural polymers, such as cellulose, natural rubber, gelatin, or polymer-homologously chemically modified derivatives thereof, such as cellulose acetates, propionates and butyrates, and the cellulose ethers, such as methyl cellulose; and also colophonium resins and derivatives.
28. Mixtures (polyblends) of the afore-mentioned polymers, for example PP/EPDM, polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO, PBT/PC/ABS or PBT/PET/PC.

Optionally, the substrate film, on which the photosensitive layer is applied according to the present invention is given a protective covering for protection against for example heat, abrasion, humidity or oxygen. Optionally the protective covering comprises a UV-absorber. Examples of suitable UV-absorbers are given as hereinbefore.
The additional protective-covering foil permits in particular the handling of very thin radiation-sensitive layers which are used, for example, in dose indicator films for electron-beam curing. In addition, there can be an opacifier, in particular iron oxide, provided in the radiation-sensitive layer. With this it is possible to eliminate measurement errors through thickness variations, as described for example in US 2007/0221864.

It is preferable that the thickness of the radiation-sensitive layer is designed to be from 1 to 200 µm and in particular from 2 to 50 µm, in order to obtain a flexible dose indicator film which can also be adhesive-bonded to flexible materials which are conducted over deflector rolls in an irradiation system, for example.

Interesting therefore also is a dosis indicator film as described above, where the photosensitive layer on the film is covered by a protective-covering foil. Optionally, in said dosis indicator film, the radiation sensitive layer of the dosis indicator film is provided with an opacifier, in particular iron oxide.

Materials proposed for the outer foils comprise for example plastics and/or coated paper, the plastic here preferably being selected from the following materials: PET, PP, PE, PVC and PS.

According to another embodiment, the outer foil is composed of a vapor-deposited metallic reflective layer which reflects a portion of the radiation as a function of its vapor-deposited thickness. This metallized reflective layer can itself be designed to be radiation-sensitive.

For attachment of the dose indicator film on a desired substrate at least the outer foil or the substrate carrying the radiation indicator film has been provided with an adhesive layer on its outward-facing side, for adhesive-bonding of the dose indicator film on the substrate. For handling of the dose indicator film, which usually is wound up to give a roll, this adhesive layer itself is provided with a further release layer preferably in the form of a release liner. For bonding of the outer foil to the radiation-sensitive layer, the adhesive layer is used to bond these respectively to one another. Adhesives that can be used are in particular solvent-containing adhesives or hot-melt adhesives.

The colorimetric measurement can for example also be performed by an automated measurement in a specifically designed measurement device as for example described in US 2007/0221864, for example a device from the company Polymer Physik.

Typical irradiation apparatuses in which the dose indicator method is used have radiation apparatuses with source powers of from 40 to 240 W/cm per source, and the UV systems here can be composed of from 1 to 10 or more tube-shaped sources. The dose indicator method is also suitable for sources of lower power and with other structural shapes. The radiation doses that can be measured using the UV-dose indicator film, for which the behavior of the film is linear, are for example from 50 mJ/cm² to 2 J/cm²,
It is preferable that the light of the different wavelengths is generated by a photodiode which is known to the person skilled in the art and is easy to handle and is long-lived.
Furthermore, it is possible to draw film strips or dose indicator films of any desired length by motor through the measurement device, thus permitting any desired endless materials to be equipped with the dose indicator films and irradiated in a desired manner.
Using process technology known to the person skilled in the art, the measured values from the measurement device are read out from a computer or are immediately transferred thereto and preferably displayed in the unit "mJ/cm²" for purposes of easy monitoring.
It is also possible to display, in a diagram reproduced on a computer screen, a location-dependent representation of the entire UV radiation reaching the dose indicator film in order, for example, to permit monitoring of the entire web width of a material to be irradiated. Particular possibilities here are irradiation across the entire width of a material in the form of a web, and also control via the dose indicator film. Furthermore, three-dimensional parts onto which the dose indicator film has been adhesive-bonded or onto which the liquid form of the dose indicator ink has been applied can also be irradiated in a desired manner, while the dose indicator system permits measurement of the amount of the entire radiation dose on the surface of the three-dimensional item.
A sensitivity factor is determined for each batch produced of the dosimeter film and is noted on the film rolls. This sensitivity factor can be input into the measurement device and saved as a parameter. Ability to calibrate the measurement devices for the future is thus provided.

The present invention pertains to a radiation dosis indicator film and a radiation dosis indicator ink.
Suitable substrates for the application of the dose indicator ink according to the invention are organic or inorganic substrates. The inorganic or organic substrate to be coated can be in any solid form. The substrate is for example in the form of a woven fabric, a fibre, a film or a three-dimensional workpiece. The substrate may be, for example, a thermoplastic, elastomeric, inherently crosslinked or crosslinked polymer, a metal, a metal oxide, a ceramic material, glass, paper, leather or textile. Preferably the substrate is a white substrate. In case of an extruded component (h), as described above, the polymer foil is applied on any substrate mentioned above or is used as a free film.
The ink or the adhesive is applied uniformly to a substrate by means of known coating techniques, for example by printing, e.g. lithography, flexography, screen printing or by inkjet printing, spin coating, dip coating, knife coating, bar coating, curtain coating, brushing, spraying, for example by electrostatic spraying or pneumatic spraying, by reverse-roll coating, and also by means of electrophoretic deposition. It is also possible to apply the composition to a temporary, flexible support and then to coat the final substrate, for example a three-dimensional metal sheet, by transferring the layer via lamination.
The quantity applied (coat thickness) and the nature of the substrate (layer support) are dependent on the desired field of application. The range of coat thicknesses generally comprises values from about 0.1 µm to more than 200 µm, for example 40 µm or 0.02 to 10 µm, preferably 0.5 to 90 µm.
The same means are employed for the coating of the substrate for the UV dose indicator film of the present invention with the photosensitive layer.

Interesting is a radiation dose indicator film, wherein the substrate is a polymer film, in particular a polyester film; as well as a radiation dose indicator film, wherein the substrate coated with the photosensitive layer comprising components (a), (b) and (c), optionally is laminated with a transparent polymer film.

The photosensitive layer of the uv dose indicator film according to the invention comprising components (a), (b) and (c), or the uv dose indicator ink according to the invention comprising components (a), (b), (c) and (d), or the uv dose indicator ink or the uv-dose indicator adhesive according to the invention comprising components (a), (b), (c) and (i) may for example also comprise further additives (g), in particular such customary in the coating and ink industry.

Non-limiting examples of further additives (g) are thermal inhibitors, antistatics, antioxidants, flow improvers, adhesion promoters, optical brighteners, fillers, wetting agents, levelling assistants; as stabilizers to increase the stability on storage in the dark, e.g. copper compounds, phosphorus compounds or quaternary ammonium compounds, wax-like substances to exclude atmospheric oxygen during the polymerization.
It is also possible to incorporate as further additive (g) another pigment or colorant, e.g. titanium dioxide.

These additives for example reduce the dependency of color development with regard to the film thickness.

The photosensitive layer of the UV-dose indicator film according to the invention comprising components (a), (b) and (c), or the uv dose indicator ink according to the invention comprising components (a), (b), (c) and (d) or the uv dose indicator ink or uv-dose indicator adhesive according to the invention comprising components (a), (b), (c) and (i) may for example also comprise another photosensitive substance, e.g. pararosaniline-nitrile as illustrated in patent WO 2005/108937.

To accelerate the photopolymerization in the case of a uv-dose indicator film comprising components (a), (b), (c) and (d), it is e.g. possible to add oxygen scavengers, accelerators, coinitiators, autoxidizers, chain transfer agents, photosensitizers which shift or broaden the spectral sensitivity.

The radiation-dose-indicators (film and ink) according to the present invention may be used in different aspects, for example to optimize an irradiation profile on a three-dimensional substrate. This is for example an object which is irradiated by UV-lamps or in a plasma chamber. Therefore the substrate (said object) is covered all over with the UV-indicator matrix. The differentiation in coloration represents the UV-dose which hits the substrate on each square mm of the three-dimensional object.
Or the UV-indicator can for example be used as a process control device. For this a small stripe or dot is applied on the substrate which is irradiated. Via the radiation dose indicator is monitored that each of the objects or substrates covered with a UV-curable coating has been irradiated with the same dose.
For example said UV-curable coating is a laquer, e.g. clear or colored, a printing ink, an adhesive etc.
Further, the indicator can for example be used as a sun light indicator and for example be attached as foil to the clothing, e.g. a bathing costume. As soon as the indicator reaches a certain color the skin should be covered to avoid an overdose of radiation of dangerous UV-light.
Another field of application for the energy-dose indicator of the present invention is its use as a freshness indicator for food or pharmaceuticals which are sensitive to light or other type of irradiation.

Decorative and imaging purposes can also be fulfilled.
The indicator for example may also be employed to monitor the daily light dose for the optimal plant growth e.g. in green houses.
Further, the quantification of the dosis emitted by an electron beam is possible.
Further interesting is the use of the composition according to the present invention for the assessment of the energy amount for a radiation-process, such as for example a plasma surface treatment.
The radiation-dose indicator can also be employed to make a direct correlation between color and surface or film property.
This summary of possible applications for the composition and method of the present invention is not limited - in general, the composition and process reveals a direct correlation between the color change of an irradiated subject and the energy-dose which caused said change in any application.

The radiation whose intensity is determined with the composition and the method according to the present invention is for example ultraviolet (UV) radiation of e.g. from about 190 nm to 800 nm, for example 190-500 nm, (including the UV-vis region). A UV-radiation source is for example sunlight or light from artificial light sources. Examples are carbon arc lamps, xenon arc lamps, low-, medium-, high- and super high- pressure mercury lamps, possibly with metal halide dopes (metal-halogen lamps), microwave-stimulated metal vapour lamps, excimer lamps, superactinic fluorescent tubes, fluorescent lamps, argon incandescent lamps, electronic flashlights, light-emitting diodes (LED), e.g. UV light emitting diodes (UV-LED), organic light-emitting diodes (OLED), photographic flood lamps, also electron beams and X-rays. Also the emitted energy dose / intensity of radiation emitted by laser light sources, for example excimer lasers, such as F₂ excimer lasers at 157 nm exposure, KrF excimer lasers for exposure at 248 nm and ArF excimer lasers for exposure at 193 nm or lasers emitting in the visible region, may be determined with the presently claimed method and composition.

The compositions of the present invention possess a high flexibility for different applications by producing reliable and reproducable results, thus providing for the necessary process stability.

The examples which follow illustrate the invention in more detail, without restricting the scope to said examples only. Parts and percentages are, as in the remainder of the description and in the claims, by weight, unless stated otherwise. Where alkyl radicals having more than three carbon atoms are referred to in the examples without any mention of specific isomers, the n-isomers are meant in each case.

In the following examples the following colorant is used:
Colorant-1:

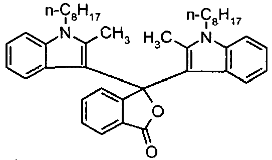

In the following examples the following photolatent acids are used:
Acid-1: 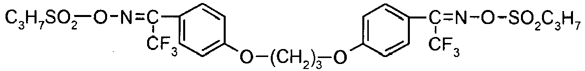
Acid-2: 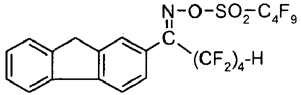
Acid-3:

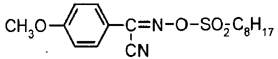

In the following examples the following UV-absorbers (UVA) are used:
Absorber-1: 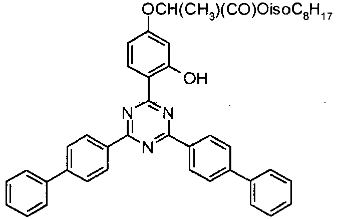
Absorber-2:

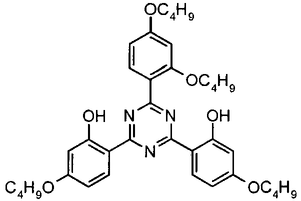

The following formulations are prepared in a copolymer of vinyl chloride/vinyl acetate (Vinylite VYHH 14% solids in ethylacetate, provided by Dow), percents being expressed on solids:

| Name | Colorformer | Acids | | UV-absorber |
|---|---|---|---|---|
| F1 | 4% colorant-1 | 1.5% acid-1 | 0.5% acid-3 | 7% absorber-1 |
| F2 | 4% colorant-1 | 1.5% acid-1 | 0.5% acid-3 | 7% absorber-2 |
| F3 | 4% colorant-1 | 1.5% acid-2 | 0.5% acid-3 | 7% absorber-1 |
| F4 | 4% colorant-1 | - | 3.0% acid-3 | 7% absorber-1 |
| F5 | 4% colorant-1 | 3.0% acid-2 | 3:0% acid-3 | 7% absorber-1 |

### Example 1

The formulation is applied onto polyester foil (Melinex foil, provided by Dupont) by means of a bar coater and dried for 10 minutes at 60°C to provide a dry film thickness of 3 microns. The films are further exposed to a fluorescent lamp (Philips TL 40W/5) at a distance of 4.5 cm from the tubes, for different exposure times.
The color of the films is measured by means of CGREC software combined to a Minolta spectrophotometer CM-3600d. Table 1 summarizes the color values measured under different irradiation conditions.

**Table 1**

| Exposure time (min) | 2 | 8 | 15 | 30 |
|---|---|---|---|---|
| a*F1 | 3.4 | 6.1 | 7.2 | 9.5 |
| a*F3 | 12 | 19.4 | 23.9 | 27.7 |

### Example 2

Application and irradiation is performed as described in example 1. The results are collected in table 2.

**Table 2**

| Exposure time (min) | 2 | 8 | 15 | 30 |
|---|---|---|---|---|
| a*F4 | 9.1 | 15.8 | 20.5 | 25.4 |
| a*F5 | 18.5 | 29.3 | 36.3 | 40.8 |

### Example 3

Application is performed as described in example 1. Irradiation is performed with a medium pressure mercury lamp from IST equipped with cold mirrors, with a lamp output of 200 W/cm at different belt speeds.
The results are collected in table 3.

**Table 3**

| Belt speed (m/min) | 80 | 40 | 20 | 15 | 10 | 5 |
|---|---|---|---|---|---|---|
| a* F4 | 18.5 | 23.7 | 38.7 | 40.1 | 39.9 | 39.7 |
| a* F5 | 34.4 | 39.2 | 48.8 | 49 | 48.6 | 46.7 |

### Example 4

Application is performed as described in example 1. Irradiation is performed with a medium pressure mercury lamp from IST, aluminium refelctors, 200 W/cm at different belt speeds. The results are collected in table 4.

**Table 4**

| Belt speed (m/min) | 80 | 40 | 20 | 10 |
|---|---|---|---|---|
| a* F1 | 15.7 | 32.4 | 38.3 | 32.8 |
| a* F2 | 18.2 | 32.3 | 31 | 25.1 |

## Claims

1. A dosis indicator film for the determination of radiation emitted by a UV-light source or an electron beam, comprising a substrate, selected from the group consisting of polymer film, paper and aluminium foil, which substrate is coated with a photosensitive composition, **characterized in that** the photosensitive composition comprises
(a) an acid responsive colorant selected from the group consisting of
(I) 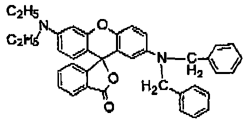
(II) 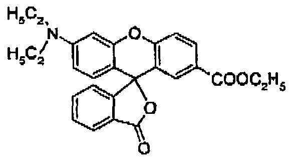 and
(III) 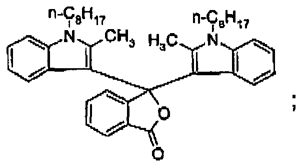
(b) at least one sulfonyloxime ester compound or a -N-O-sulfonyl compound as photolatent acid; and
(c) at least one UV-absorber compound, selected from the group consisting of

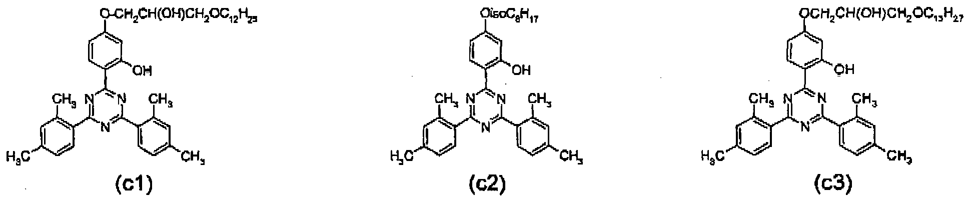

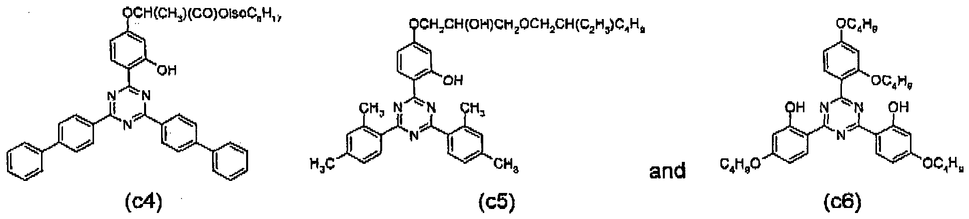

2. A dosis indicator film according to claim 1, where the photosensitive layer comprises a compound of the formula IIa, IIb, IIc, IId or IIe as the photolatent acid 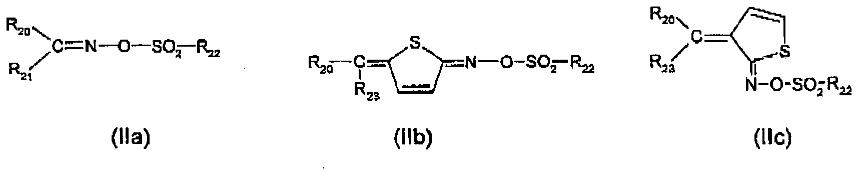 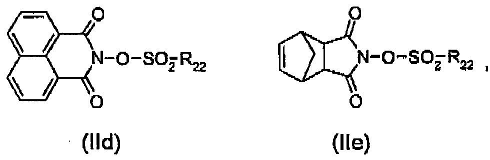 wherein
R₂₀ is 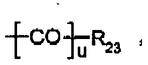 (CO)O-C₁-C₂₀alkyl, CN or C₁-C₂₀haloalkyl;
R₂₁ has one of the definitions given for R₂₀ or is 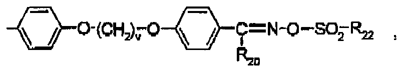 phenyl, phenyl substituted by one or more C₁-C₁₀alkyl or C₁-C₁₀alkoxy, or R₂₁ is 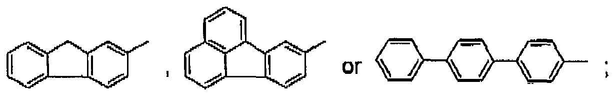
R₂₂ is C₁-C₂₀alkyl, C₁-C₂₀haloalkyl, camphoryl, phenyl-C₁-C₆alkyl, C₃-C₃₀cycloalkyl, phenyl, naphthyl, anthryl or phenanthryl, the groups cycloalkyl, phenyl, naphthyl, anthracyl and phenanthryl being unsubstituted or substituted by one or more halogen, C₁-C₁₂haloalkyl, CN, NO₂, C₁-C₂₀alkyl, phenyl, C₁-C₁₂alkylthio, C₁-C₁₂alkoxy, phenoxy, C₁-C₁₂alkyl-O(CO)-, C₁-C₁₂alkyl-(CO)O-, R₂₄OSO₂- and/or -NR₂₅R₂₆ ;
u is 0 or 1;
v is an integer from 2-6, preferably 3;
R₂₃ is C₁-C₂₀alkyl, cyclopentyl, cyclohexyl, camphoryl, unsubstituted phenyl, or phenyl substituted by one or more halogen, C₁-C₁₂alkyl, OR₂₇, SR₂₇ or NR₂₅R₂₆;
R₂₄ is hydrogen, C₁-C₂₀alkyl, phenyl or phenyl substituted by C₁-C₂₀alkyl;
**R₂₅** and **R₂₆** are each independently of the other hydrogen, C₁-C₂₀alkyl, C₂-C₁₂hydroxyalkyl, or R₂₅ and R₂₆, together with the N atom to which they are bonded, form a 5- or 6-membered ring, which optionally contains one or more O or NR₂₈;
**R₂₇** is C₁-C₂₀alkyl, phenyl, phenyl-C₁-C₆alkyl or C₂-C₁₂hydroxyalkyl; and
**R₂₈** is hydrogen, phenyl, phenyl-C₁-C₆alkyl, C₁-C₂₀alkyl or C₂-C₁₂hydroxyalkyl.

3. A dosis indicator film according to claim **2**, where the photosensitive acid is a compound selected from the group consisting of
(1) 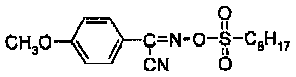
(2) 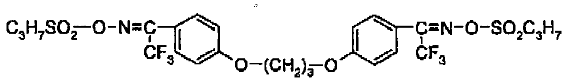
(3) 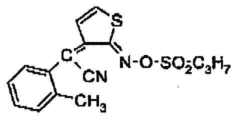
(4) 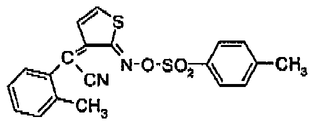
(5) 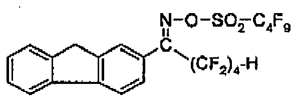
(6) 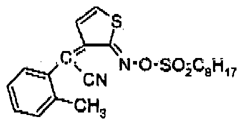
(7) 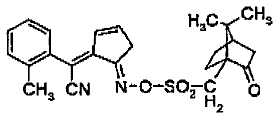
(8) 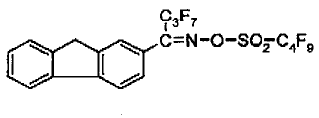
(9) 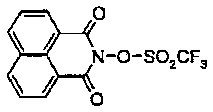
(10) 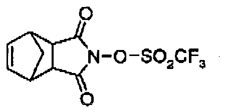
(11) 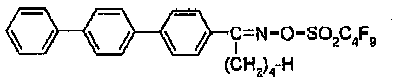
(12) 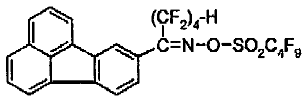 and
(13) any mixture thereof.

4. A dosis indicator ink for the determination of radiation emitted by a UV-light source or an electron beam, comprising
(a) an acid responsive colorant selected from the group consisting of
(I) 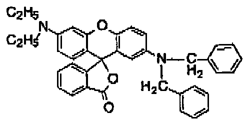
(II) 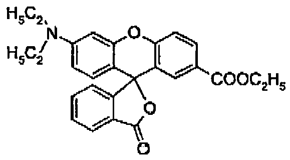 and
(III) 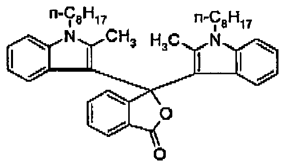
(b) at least one sulfonyloxime ester compound or a -N-O-sulfonyl compound as photolatent acid;
(c) at least one UV-absorber compound, selected from the group consisting of 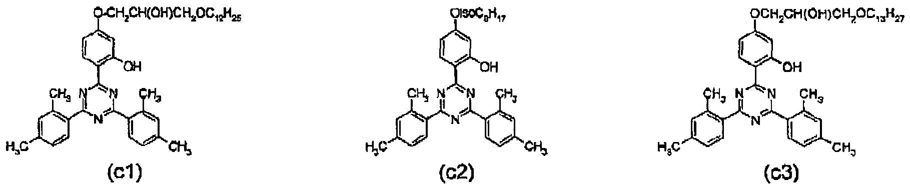 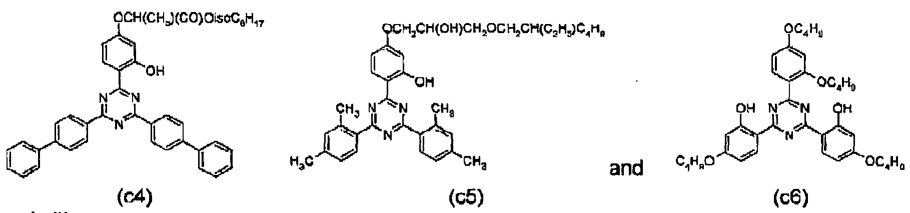 and either
(d) a polymerizable ethylenically unsaturated component; and optionally
(e) a radical photoinitiator; and optionally
(g) further additives
or
(i) a solventborne or waterborne or solventless liquid ink or solventbome or waterborne or solventless liquid adhesive or a hotmelt adhesive providing a dried film

5. A dosis indicator film according to claim 1, or a dosis indicator ink according to claim **4**, wherein the acid-responsive colorant (a) is present in a concentration of 0.1 %-20%.

6. A dosis indicator film according to claim 1, or a dosis indicator ink according to claim **4**, wherein the photolatent acid (b) is present in a concentration of 0.1%-20%,

7. A dosis indicator film according to claim 1, or a dosis indicator ink according to claim **4**, wherein the UV-absorber compound (c) is present in a concentration of 0.5%-10%.

8. A method to determine the radiation dose absorbed by a dosis indicator film according to claim 1, by measuring the color intensity of the irradiated film, either visually or by colorimetry measurement, giving a direct correlation to the radiation-dose via the color change from the non-irradiated to the irradiated film, **characterized in that** the film comprises the photosensitive layer as defined in claim 1.

9. A method to determine the radiation dose absorbed by a dosis indicator ink according to claim **4,** by measuring the color intensity of the irradiated ink, either visually or by colorimetry measurement, giving a direct correlation to the radiation-dose via the color change from the non-irradiated to the irradiated dosis indicator ink, **characterized in that** the ink comprises components (a), (b), (c), (d) and optionally (e) or/and (g) as defined in claim **4** or components (a), (b), (c) and (i) as defined in claim **4.**

10. A method according to claim **8** or claim **9** wherein the radiation dose absorbed by the dosis indicator film or the dosis indicator ink is higher than 50 mJ·cm⁻².

11. Use of a dose indicator film as defined in claim **1,** or a dose indicator ink as defined in claim **4,** for the determination of the dose of radiation absorbed by a substrate.

12. Use according to claim **11,** wherein the radiation dose absorbed by the dosis indicator film or the dosis indicator ink is higher than 50 mJ·cm⁻².

## Patentansprüche

1. Dosisindikatorfolie zur Bestimmung der von einer UV-Lichtquelle oder einem Elektronenstrahl emittierten Strahlung, umfassend ein Substrat, das aus der Gruppe bestehend aus Polymerfolie, Papier und Aluminiumfolie ausgewählt ist und mit einer lichtempfindlichen Zusammensetzung beschichtet ist, **dadurch gekennzeichnet, dass** die lichtempfindliche Zusammensetzung Folgendes umfasst:
(a) ein auf Säure ansprechendes Farbmittel aus der Gruppe bestehend aus
(I) 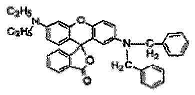
(II) 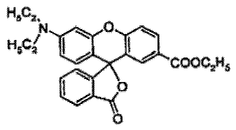 und
(III) 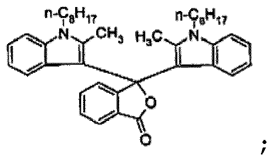
(b) mindestens eine Sulfonyloximesterverbindung oder eine -N-O-Sulfonylverbindung als photolatente Säure und
(c) mindestens eine UV-Absorberverbindung, ausgewählt aus der Gruppe bestehend aus

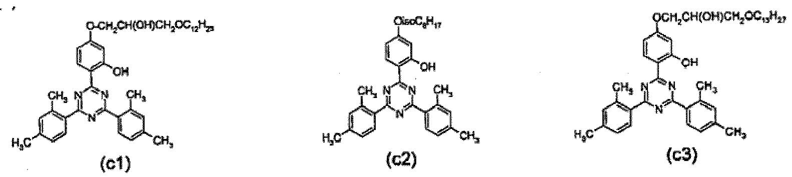

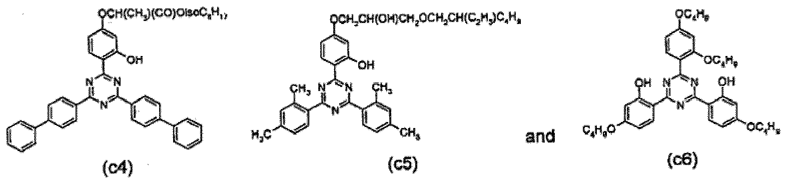

2. Dosisindikatorfolie nach Anspruch 1, wobei die lichtempfindliche Schicht als photolatente Säure eine Verbindung der Formel IIa, IIb, IIc, IId oder IIe umfasst: 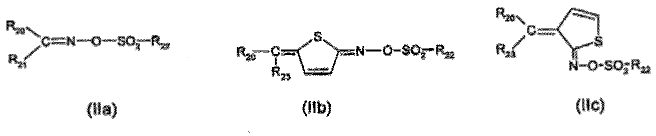 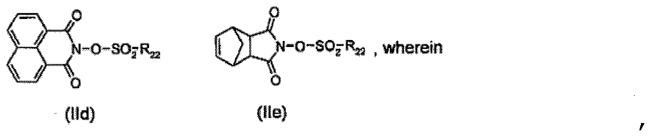 worin
R₂₀ für 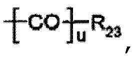 (CO)O-C₁-C₂₀-Alkyl, CN oder C₁-C₂₀-Halogenalkyl steht;
R₂₁ eine der für R₂₀ angegebenen Bedeutungen besitzt oder für 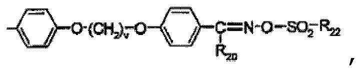 Phenyl, Phenyl, das durch ein oder mehrere C₁-C₁₀-Alkyl oder C₁-C₁₀-Alkoxy substituiert ist, steht oder R₂₁ für 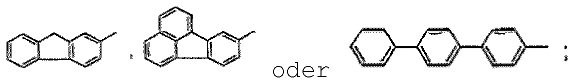 steht;
R₂₂ für C₁-C₂₀-Alkyl, C₁-C₂₀-Halogenalkyl, Campheryl, Phenyl-C₁-C₆-alkyl, C₃-C₃₀-Cycloalkyl, Phenyl, Naphthyl, Anthryl oder Phenanthryl steht; wobei die Gruppen Cycloalkyl, Phenyl, Naphthyl, Anthracyl und Phenanthryl unsubstituiert oder durch ein oder mehrere Halogen, C₁-C₁₂-Halogenalkyl, CN, NO₂, C₁-C₂₀-Alkyl, Phenyl, C₁-C₁₂-Alkylthio, C₁-C₁₂-Alkoxy, Phenoxy, C₁-C₁₂-Alkyl-O(CO)-, C₁-C₁₂-Alkyl-(CO)O-, R₂₄OSO₂- und/oder -NR₂₅R₂₆ substituiert sind;
u für 0 oder 1 steht;
v für eine ganze Zahl von 2-6, vorzugsweise 3, steht;
R₂₃ für C₁-C₂₀-Alkyl, Cyclopentyl, Cyclohexyl, Campheryl, unsubstituiertes Phenyl oder Phenyl, das durch ein oder mehrere Halogen, C₁-C₁₂-Alkyl, OR₂₇, SR₂₇ oder NR₂₅R₂₆ substituiert ist, steht;
R₂₄ für Wasserstoff, C₁-C₂₀-Alkyl, Phenyl oder Phenyl, das durch C₁-C₂₀-Alkyl substituiert ist, steht;
R₂₅ und R₂₆ jeweils unabhängig voneinander für Wasserstoff, C₁-C₂₀-Alkyl, C₂-C₁₂-Hydroxyalkyl stehen oder R₂₅ und R₂₆ zusammen mit dem N-Atom, an das sie gebunden sind, einen 5- oder 6-gliedrigen Ring, der gegebenenfalls ein oder mehrere 0 oder NR₂₈ enthält, bilden;
R₂₇ für C₁-C₂₀-Alkyl, Phenyl, Phenyl-C₁-C₆-alkyl oder C₂-C₁₂-Hydroxyalkyl steht und
R₂₈ für Wasserstoff, Phenyl, Phenyl-C₁-C₆-alkyl, C₁-C₂₀-Alkyl oder C₂-C₁₂-Hydroxyalkyl steht.

3. Dosisindikatorfolie nach Anspruch 2, wobei es sich bei der lichtempfindlichen Säure um eine Verbindung aus der Gruppe bestehend aus
(1) 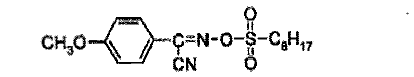
(2) 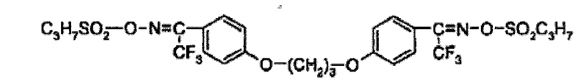
(3) 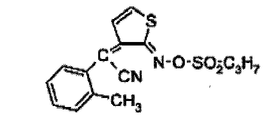
(4) 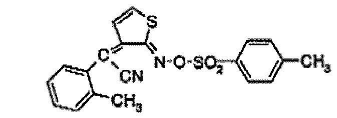
(5) 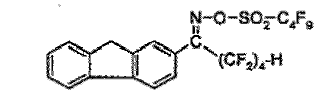
(6) 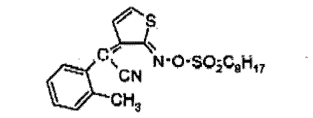
(7) 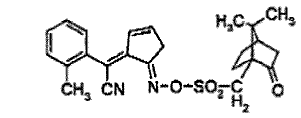
(8) 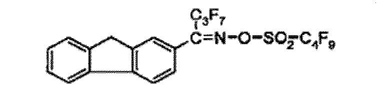
(9) 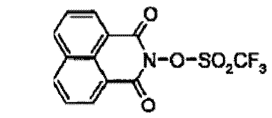
(10) 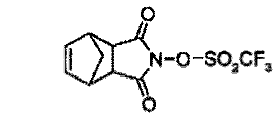
(11) 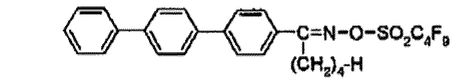
(12) 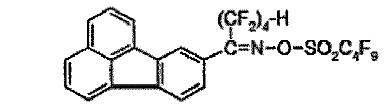 **and**
und
(13) einer beliebigen Mischung davon handelt.

4. Dosisindikatortinte zur Bestimmung der von einer UV-Lichtquelle oder einem Elektronenstrahl emittierten Strahlung, umfassend
(a) ein auf Säure ansprechendes Farbmittel aus der Gruppe bestehend aus
(I) 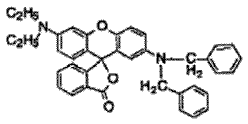
(II) 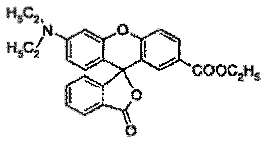 und
(III) 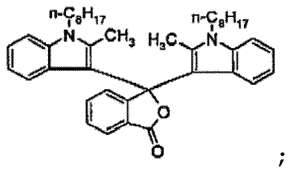
(b) mindestens eine Sulfonyloximesterverbindung oder eine -N-O-Sulfonylverbindung als photolatente Säure und
(c) mindestens eine UV-Absorberverbindung, ausgewählt aus der Gruppe bestehend aus 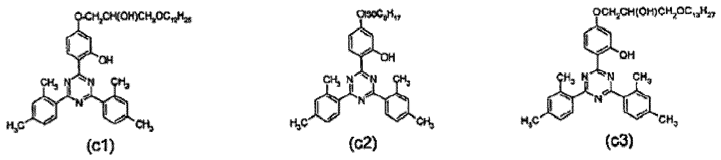 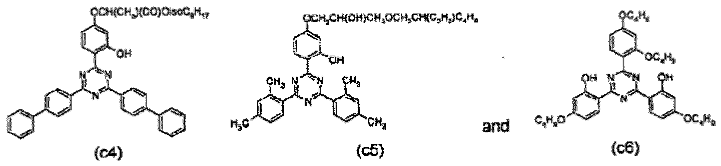 und entweder
(d) eine polymerisierbare ethylenisch ungesättigte Komponente und gegebenenfalls
(e) einen radikalischen Photoinitiator und gegebenenfalls
(f) weitere Additive
oder
(i) eine lösungsmittelhaltige oder wässrige oder lösungsmittelfreie flüssige Tinte oder einen lösungsmittelhaltigen oder wässrigen oder lösungsmittelfreien flüssigen Klebstoff oder einen Schmelzklebstoff, die bzw. der einen getrockneten Film liefert.

5. Dosisindikatorfolie nach Anspruch 1 oder Dosisindikatortinte nach Anspruch 4, wobei das auf Säure ansprechende Farbmittel (a) in einer Konzentration von 0,1%-20% vorliegt.

6. Dosisindikatorfolie nach Anspruch 1 oder Dosisindikatortinte nach Anspruch 4, wobei die photolatente Säure (b) in einer Konzentration von 0,1%-20% vorliegt.

7. Dosisindikatorfolie nach Anspruch 1 oder Dosisindikatortinte nach Anspruch 4, wobei die UV-Absorberverbindung (c) in einer Konzentration von 0,5%-10% vorliegt.

8. Verfahren zur Bestimmung der von einer Dosisindikatorfolie gemäß Anspruch 1 absorbierten Strahlungsdosis durch Messung der Farbintensität der bestrahlten Folie, entweder visuell oder durch kolorimetrische Messung, die über die Farbänderung von der unbestrahlten zur bestrahlten Folie eine direkte Korrelation zur Strahlungsdosis ergibt, **dadurch gekennzeichnet, dass** die Folie die lichtempfindliche Schicht gemäß Anspruch 1 umfasst.

9. Verfahren zur Bestimmung der von einer Dosisindikatortinte gemäß Anspruch 4 absorbierten Strahlungsdosis durch Messung der Farbintensität der bestrahlten Teinte, entweder visuell oder durch kolorimetrische Messung, die über die Farbänderung von der unbestrahlten zur bestrahlten Dosisindikatortinte eine direkte Korrelation zur Strahlungsdosis ergibt, **dadurch gekennzeichnet, dass** die Tinte die Komponenten (a), (b), (c), (d) und gegebenenfalls (e) oder/und (g) gemäß Anspruch 4 oder die Komponenten (a), (b), (c) und (i) gemäß Anspruch 4 umfasst.

10. Verfahren nach Anspruch 8 oder Anspruch 9, bei dem die von der Dosisindikatorfolie bzw. der Dosisindikatortinte absorbierte Strahlungsdosis höher als 50 mJ·cm⁻² ist.

11. Verwendung einer Dosisindikatorfolie gemäß Anspruch 1 oder einer Dosisindikatortinte gemäß Anspruch 4 zur Bestimmung der von einem Substrat absorbierten Strahlungsdosis.

12. Verwendung nach Anspruch 11, wobei die von der Dosisindikatorfolie bzw. der Dosisindikatortinte absorbierte Strahlungsdosis höher als 50 mJ·cm⁻² ist.

## Revendications

1. Film indicateur de dose pour la détermination du rayonnement émis par une source de rayonnement UV ou un faisceau d'électrons, comprenant un substrat choisi dans le groupe constitué par un film polymère, du papier et une feuille d'aluminium, lequel substrat est recouvert d'une composition photosensible, **caractérisé en ce que** la composition photosensible comprend
(a) un colorant sensible aux acides choisi dans le groupe constitué par
(I) 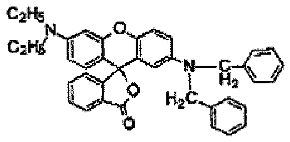
(II) 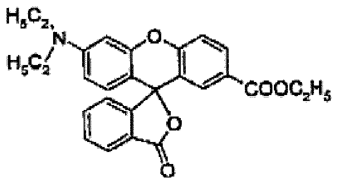 and
(III) 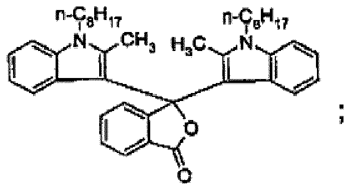
(b) au moins un composé ester de sulfonyloxime ou un composé -N-O-sulfonyle en tant qu'acide photolatent ; et
(c) au moins un composé absorbeur d'UV choisi dans le groupe constitué par

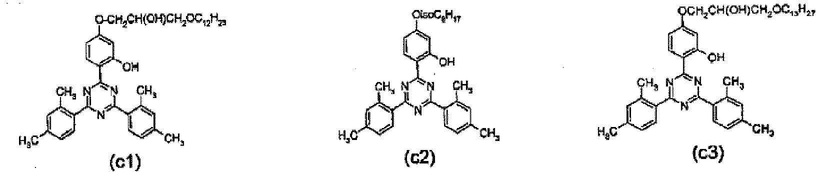

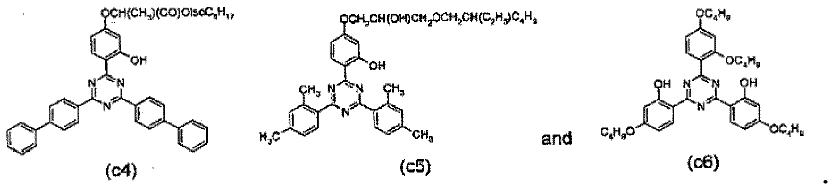

2. Film indicateur de dose selon la revendication 1, dans lequel la couche photosensible comprend un composé de formule IIa, IIb, IIc, IId ou IIe en tant qu'acide photolatent 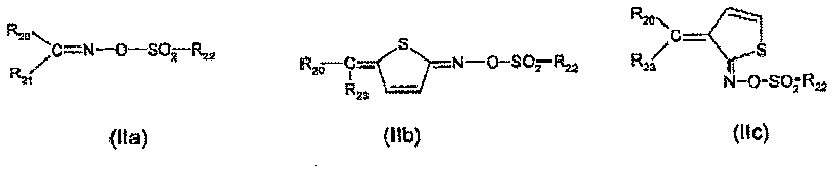 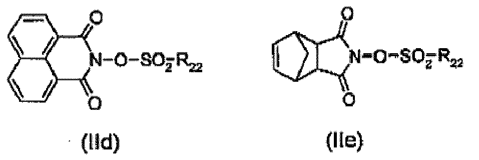 wherein
**R₂₀** représente -[CO]ᵤ-R₂₃, un groupe (CO)O-alkyle en C₁-C₂₀, CN, ou un groupe halogénoalkyle en C₁-C₂₀ ; **R₂₁** a l'une des définitions données pour R₂₀ ou représente 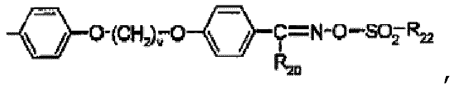 un phényle, ou un phényle substitué par un ou plusieurs groupes alkyle en C₁-C₁₀ ou alcoxy en C₁-C₁₀, ou bien R₂₁ représente 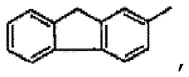 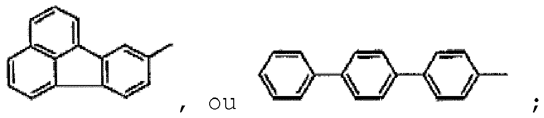
**R₂₂** représente un groupe alkyle en C₁-C₂₀, halogénoalkyle en C₁-C₂₀, camphoryle, phényl-alkyle en C₁-C₆, cycloalkyle en C₃-C₃₀, phényle, naphtyle, anthryle ou phénanthryle, les groupes cycloalkyle, phényle, naphtyle, anthracyle et phénanthryle étant non substitués ou substitués par un ou plusieurs groupes halogéno, halogénoalkyle en C₁-C₁₂, CN, NO₂, alkyle en C₁-C₂₀, phényle, (alkyl en C₁-C₁₂) thio, alcoxy en C₁-C₁₂, phénoxy, (alkyl en C₁-C₁₂)-O(CO)-, (alkyl en C₁-C₁₂)-(CO)O-, R₂₄OSO₂- et/ou -NR₂₅R²⁶ ;
**u** vaut 0 ou 1 ;
**v** est un entier valant de 2 à 6, de préférence 3 ; **R₂₃** représente un alkyle en C₁-C₂₀, un cyclopentyle, un cyclohexyle, un camphoryle, un phényle non substitué, ou un phényle substitué par un ou plusieurs groupes halogéno, alkyle en C₁-C₁₂, OR₂₇, SR₂₇ ou NR₂₅R₂₆ ;
**R₂₄** représente un hydrogène, un alkyle en C₁-C₂₀, un phényle, ou un phényle substitué par un groupe alkyle en C₁-C₂₀ ;
**R₂₅** et **R₂₆** représentent chacun indépendamment de l'autre un hydrogène, un alkyle en C₁-C₂₀, ou un groupe hydroxyalkyle en C₂-C₁₂, ou bien R₂₅ et R₂₆, conjointement avec l'atome d'azote auquel ils sont liés, forment un cycle à 5 ou 6 chaînons, qui contient éventuellement un ou plusieurs 0 ou NR₂₈ ;
**R₂₇** représente un groupe alkyle en C₁-C₂₀, phényle, phényl-alkyle en C₁-C₆ ou hydroxyalkyle en C₁-C₁₂ ; et
**R₂₈** représente un hydrogène, un phényle, un groupe phényl-alkyle en C₁-C₆, un alkyle en C₁-C₂₀ ou un groupe hydroxyalkyle en C₂-C₁₂.

3. Film indicateur de dose selon la revendication 2, dans lequel l'acide photosensible est un composé choisi dans le groupe constitué par
(1) 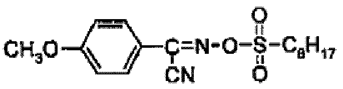
(2) 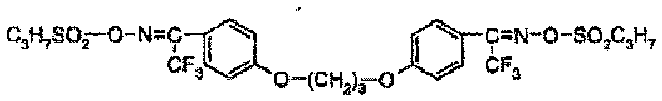
(3) 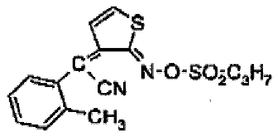
(4) 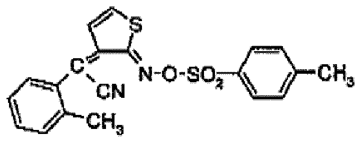
(5) 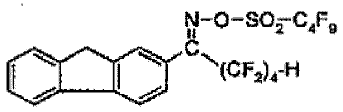
(6) 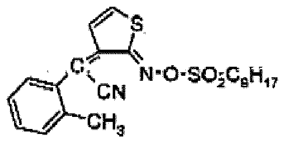
(7) 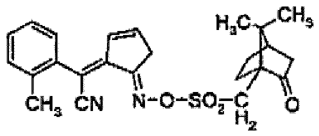
(8) 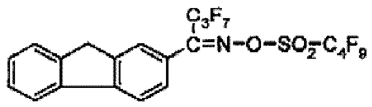
(9) 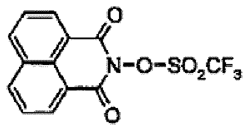
(10) 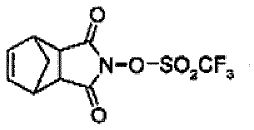
(11) 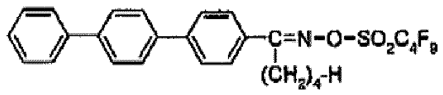
(12) 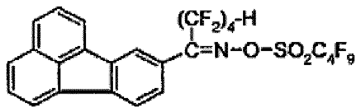 et
(13) tout mélange de ceux-ci.

4. Encre indicatrice de dose pour la détermination du rayonnement émis par une source de rayonnement UV ou un faisceau d'électrons, comprenant
(a) un colorant sensible aux acides choisi dans le groupe constitué par
(I) 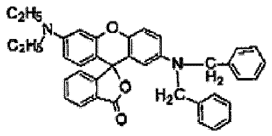
(II) 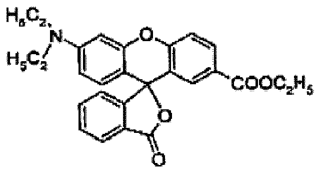 and
(III) 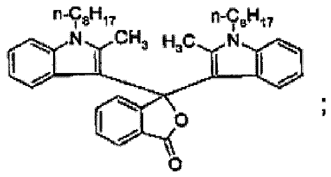
(b) au moins un composé ester de sulfonyloxime ou un composé -N-O-sulfonyle en tant qu'acide photolatent ;
(c) au moins un composé absorbeur d'UV choisi dans le groupe constitué par 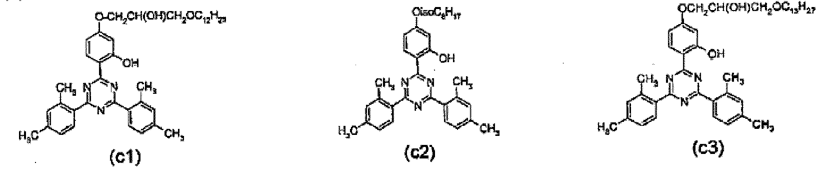 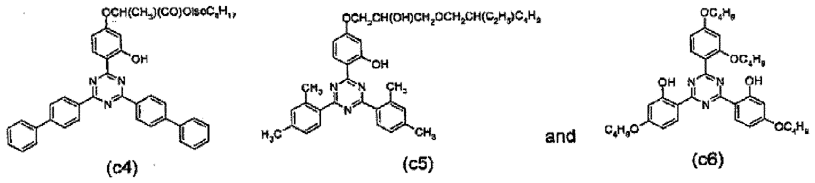 et soit
(d) un composant éthyléniquement insaturé polymérisable ; et éventuellement
(e) un photoinitiateur radicalaire ; et éventuellement
(f) d'autres additifs,
soit
(i) une encre liquide en phase solvant ou en phase aqueuse ou sans solvant ou un adhésif liquide en phase solvant ou en phase aqueuse ou sans solvant ou un adhésif thermofusible donnant un film séché.

5. Film indicateur de dose selon la revendication 1, ou encre indicatrice de dose selon la revendication 4, dans lesquels le colorant sensible aux acides (a) est présent à une concentration de 0,1 %-20 %.

6. Film indicateur de dose selon la revendication 1, ou encre indicatrice de dose selon la revendication 4, dans lesquels l'acide photolatent (b) est présent à une concentration de 0,1 %-20 %.

7. Film indicateur de dose selon la revendication 1, ou encre indicatrice de dose selon la revendication 4, dans lesquels le composé absorbeur d'UV (c) est présent à une concentration de 0,5 %-10 %.

8. Procédé pour déterminer la dose de rayonnement absorbée par un film indicateur de dose selon la revendication 1, en mesurant l'intensité de la couleur du film irradié, visuellement ou par mesure colorimétrique, donnant une corrélation directe avec la dose de rayonnement par le changement de couleur entre le film non irradié et irradié, **caractérisé en ce que** le film comprend la couche photosensible telle que définie dans la revendication 1.

9. Procédé pour déterminer la dose de rayonnement absorbée par une encre indicatrice de dose selon la revendication 4, en mesurant l'intensité de la couleur de l'encre irradiée, visuellement ou par mesure colorimétrique, donnant une corrélation directe avec la dose de rayonnement par le changement de couleur entre l'encre indicatrice de dose non irradiée et irradiée, **caractérisé en ce que** l'encre comprend les composants (a), (b), (c), (d) et éventuellement (e) et/ou (g) tels que définis dans la revendication 4 ou les composants (a), (b), (c) et (i) tels que définis dans la revendication 4.

10. Procédé selon la revendication 8 ou la revendication 9 dans lequel la dose de rayonnement absorbée par le film indicateur de dose ou l'encre indicatrice de dose est supérieure à 50 mJ·cm⁻².

11. Utilisation d'un film indicateur de dose tel que défini dans la revendication 1, ou d'une encre indicatrice de dose telle que définie dans la revendication 4, pour la détermination de la dose de rayonnement absorbée par un substrat.

12. Utilisation selon la revendication 11, dans laquelle la dose de rayonnement absorbée par le film indicateur de dose ou l'encre indicatrice de dose est supérieure à 50 mJ·cm⁻².
